# EUROPEAN PATENT SPECIFICATION

(11) **EP 0 508 598 B1**
(45) Date of publication and mention of the grant of the patent: **28.12.1994**
(21) Application number: 92302028.3
(22) Date of filing: 10.03.1992
(51) Int. Cl.: B25J 15/04

(54) **Tool fastening apparatus for industrial robots**
Werkzeugbefestigungsgerät für Industrieroboter
Porte-outil pour un robot industriel

(30) Priority: 12.03.1991 JP 21911/91
(43) Date of publication of application: 14.10.1992
(73) Proprietor: SMC CORPORATION, Minato-ku Tokyo 105 (JP)
(72) Inventor: Hosono, Masayuki, c/o SMC Corporation Soka Kojo, Soka-shi, Saitama (JP); Miyachi, Hiroshi, c/o SMC Corporation Soka Kojo, Soka-shi, Saitama (JP); Ueno, Yoshiteru, c/o SMC Corporation Soka Kojo, Soka-shi, Saitama (JP); Tanigawa, Masahito, c/o SMC Corporation Soka Kojo, Soka-shi, Saitama (JP)
(74) Representative: Allam, Peter Clerk

(56) References cited:
- DE-A- 3 710 472
- DE-A- 3 713 056
- US-A- 4 676 142
- US-A- 4 826 230

## Description

This invention relates to tool fastening apparatus for fastening a manipulating hand and other tools to the tip of the arm of an industrial robot.

Robots having a hand and other tools fastened to the tip of their arm are used to perform assembling and other kinds of work. These robots are designed to use various types of interchangeable tools suited for the profile of each workpiece they handle and the type of each work they perform.

Also, these robots have a capability to automatically change the tools they operate, which increases the utilization rate of the robots. This automatic tool change has been achieved by means of a fastening apparatus comprising a connecting unit attached to the arm of the robot and a connecting unit attached to each tool. A tool is fastened to the arm of the robot by joining together the connecting units thereon. The interchangeable tools to be used are held on standby in a predetermined state on a tool stand provided in a given position. The robot carries a used tool to the position assigned thereto on the tool stand to release the tool from the tip of the arm thereof by separating the joined connecting units. Then, the robot carrying no tool moves to where the tool to be used in the next operation is held on the tool stand to pick it up. After the new tool has been fastened to the arm by means of the connecting units, the robot proceeds to the next operation.

But the automatically connected new tool cannot perform its function satisfactorily if the arm-side and tool-side coupling units are not aligned to each other and the arm and tool are not accurately positioned around the axes thereof.

As the tool fastened to the tip of the arm of the robot must obtain a supply of hydraulic fluid for operation through the connecting unit on the arm, a fluid passage coupling must be provided, in addition to the means for fixing the relative position of the joined coupling units, in each of the contact surfaces of the arm-side and tool-side coupling units to provide a communicating passage when they are joined together. Furthermore, terminals to establish an electric connection between the joined coupling units are also provided in the contact surfaces, as required.

The inventors have developed various types of apparatus to accurately and automatically place the coupling units on the arm of the robot and the tool in proper position. Such apparatus is desirably as small and light as possible. If the apparatus attached to the tip of the arm of the robot is large, the arm of the robot must have a greater strength and operating power, which, in turn, brings about an increase in the size of the industrial robot itself. As such, the need for smaller and lighter apparatus, which is naturally great, grows increasingly acute as distance between the apparatus mounted on the arm of the robot and the tip thereof grows smaller.

However, provision of a fluid passage coupling in addition to the units positioning means increases the diameter of each unit and the size of the whole assembly. Therefore, it is desirable to keep to a minimum the size increase associated with the provision of the fluid passage coupling.

To allow the attached tool to perform the desired work on individual workpieces, it is also preferable to minimize the size of the tool coupling apparatus. A smaller coupling unit facilitates and simplifies the control of the robot arm and assures accurate, safe and easy operation of the tool.

The invention provides a tool fastening apparatus for fastening an interchangeable tool to the arm of an industrial robot, as set out in Claim 1.

The invention enables the provision of an inexpensive detachable tool fastening apparatus that easily and accurately fixes the relative position of the coupling units on the arm of the robot and the tool to be connected thereto by the use of steel balls made to close dimensional tolerance and available at low prices. The entire apparatus can remain small and light enough without sacrificing the accuracy of positioning even when a fluid passage coupling to supply a hydraulic fluid to the connected tool is provided in the contact surface between the arm- and tool-side coupling units.

In preferred embodiments, each set of balls is carried by and closely packed in an annular groove provided in one surface of the respective ball base and centred about the axis thereof, with a part of the balls sticking out therefrom. Preferably, each groove has an annular ball holder having a tapered outer surface to hold the balls in position and fitted on the inside of the balls to fix the balls between the ball base and ball holder. Desirably, each of the ball bases on the arm side and tool side has an engaging hole opening to the ball-carrying groove, with an engaging ball inserted therein. This engaging ball, which slightly sticks out into between a pair of adjoining balls, fixes the position of the arranged balls. The arranged balls are easily and accurately fixed by displacing the set of balls in the ball ring on the arm of the robot from that on the tool by a distance equal to one half of the diameter of the balls.

One of the ball bases may have, on the inside of the set of balls forming the ball ring, a plurality of guide pins to keep the relative displacement between the two coupling units within the limit to assure the proper engagement thereof, while the other ball base may have, in the same position, a corresponding number of pin holes to accommodate the guide pins.

As electrical connectors, a set of contact terminals may be provided on a detachable base that is arched along the periphery of the casing of the coupling unit and bolted to a part of the periphery of the contacting edges of the two coupling units, thereby minimizing the projection of the connectors.

Also, the tool fastening apparatus of this invention may have a piston that reciprocates in a cylinder bore provided in the coupling unit attached to the arm of the robot. In preferred arrangements of this type, the support section of the piston carries a pair of hooks to engage with and disengage from the coupling unit attached to the tool that are pivotally attached thereto in the middle portion thereof, with an engaging grip to engage with a part of the tool-side coupling unit provided at the tip of each hook. The arm-side coupling unit had a release pin positioned between the paired hooks to release the engaging grip on the hook when the piston moves. The engaging grip at the tip of the hook engages with an engaging member on the tool-side coupling unit when the piston exerts a compressive force on the two coupling units, thereby assuring a stable linkage.

When the arm- and tool-side coupling units are put together, with the contact surfaces thereof temporarily positioned by means of the arm of the robot, the balls on the ball rings thereon engage with each other to automatically and easily achieve accurate alignment and positioning around the axes thereof. Thus, the alignment of the coupling units and the positioning around the axes thereof can be achieved simply and automatically.

Furthermore, provision of the ball rings in the periphery of the coupling units increases the diameter thereof, with a resulting increase in the accuracy of the alignment and positioning around the axes of the coupling units Also, provision of the fluid passage couplings in a space inside the ball rings is conductive to the downsizing of the entire apparatus. To be more specific, the fluid passage couplings to supply a hydraulic fluid to the attached tool can be incorporated in the coupling units without sacrificing the accuracy of positioning. The downsizing permits reducing the weight of the arm of the robot, the driving force thereof, and the size of the entire apparatus while expanding the operation range of the robot arm.

The invention is hereinafter described in more detail by way of example only, with reference to the accompanying drawings, in which:-
Fig. 1 is a cross-sectional front view showing a preferred embodiment of this invention.

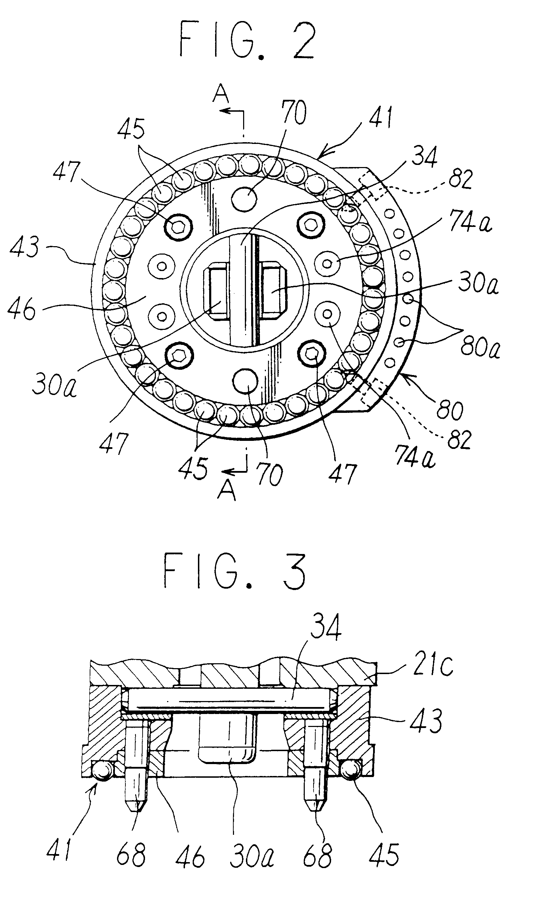

Fig. 2 is a bottom view of an arm-side coupling unit of the above preferred embodiment.
Fig. 3 is a cross-sectional view taken along the line A-A of Fig. 2.

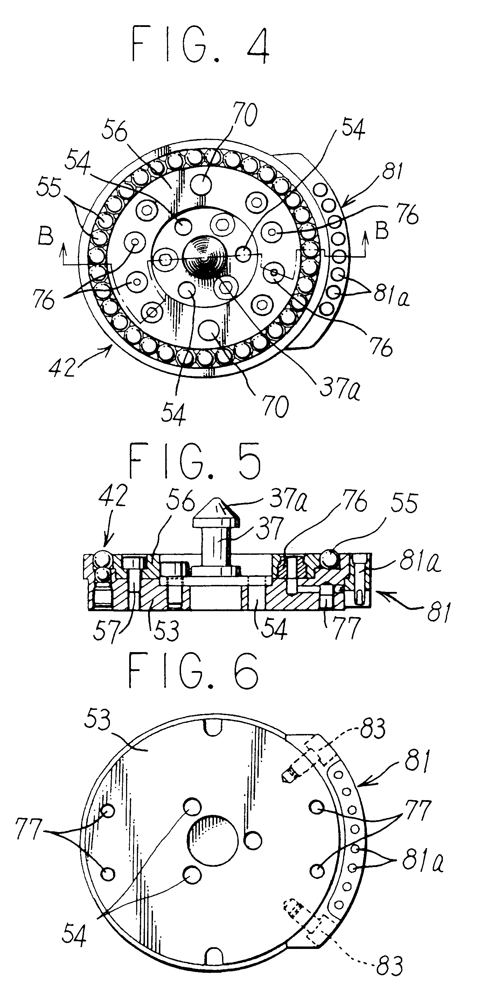

Fig. 4 is a plan view of a tool-side coupling unit.
Fig. 5 is a cross-sectional view taken along the line B-B of Fig. 4.
Fig. 6 is a bottom view of a tool-side coupling unit.
Fig. 7 is a perspective view showing a pair of ball rings.
Fig. 8 is a cross-sectional view enlarging the principal part of the balls arranged in the ball rings.
Fig. 9 is a cross-sectional view showing the same part of another preferred embodiment as in Fig. 8.
Fig. 10 is a cross-sectional view enlarging the principal part of an arm-side coupling unit.
Fig. 11 is a front view of a preferred embodiment in use.

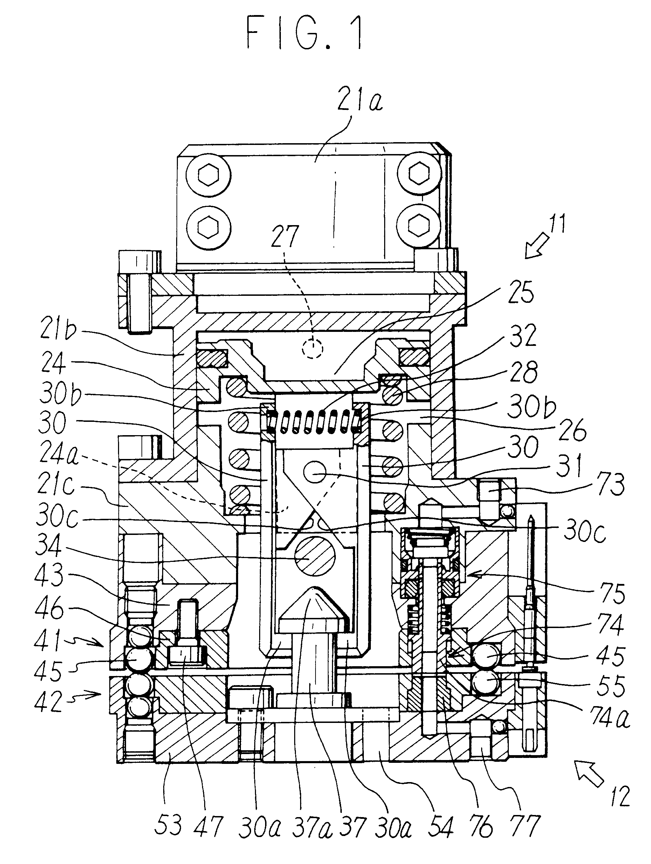

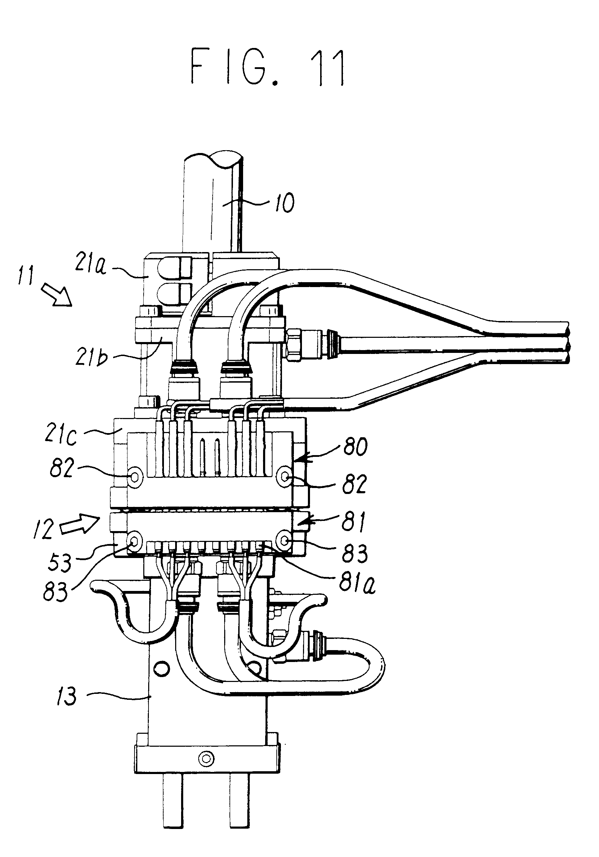

Fig. 1 shows the general construction of a preferred embodiment of a tool fastening apparatus according to this invention, which comprises, as shown in Fig. 11, a coupling unit 11 attached to the tip 10 of the arm of the robot and another coupling unit 12 attached to a pneumatically operated hand 13, which is one of the tools attached to the arm of the robot. The two coupling units 11 and 12 are detachably connected to each other.

The casing of the arm-side coupling unit has a projection 21a that engages with the arm of the robot, a cylinder 21b and a base 21c, which are integrally combined with a ball base 43 of a ball ring 41 that constitutes a positioning coupling to be described later by means of fastening bolts.

The piston 24 divides the inside of the cylinder bore in the cylinder 21b that opens in that surface which faces the tool-side coupling unit into a pressure chamber 25 on the inner side and a breathing chamber 26 closer to the opening. The pressure chamber 25 communicates with a port 27, through which the compressed air is supplied and discharged, that opens to outside the casing 21. A compressed reset spring 28 is interposed between the piston 24 and the step in the base 21c.

The middle part of a pair of hooks 30 to bring into and out of engagement with the coupling unit 12 is pivotally connected to a support projection 24a, which sticks out from the piston 24, by means of a support pin 31. Each hook 30 has an engaging grip 30a, which engages with a part of the coupling unit 12 on the tool and sticks out through an opening at the center of the base 21c, at the tip thereof, with a compressed open-close spring 32 interposed between the base ends 30b thereof. The open-close spring 32 brings the engaging grips 30a closer to each other.

A release pin 34 disposed between the pair of hooks 30 to release the engaging grips 30a is provided in the opening at the center of the base 21c. Also, each hook 30 has an inclined surface 30c at the opposite end of the release pin 34. The release pin 34 opens the engaging grips 30a when the piston 24 moves to bring the inclined surfaces 30c of the hooks into contact with the release pin 34.

The tool-side coupling unit 12 has a plurality of tool fastening holes 54 in a ball base 53 of a ball ring 42 that constitutes a positioning coupling so that the air-operated hand 13 (shown in Fig. 11) or other type of desired tool may be fastened thereto. An engaging member 37 sticks out at the center of the plane where the coupling unit 12 comes in contact with the arm-side coupling unit 11 to engage with the engaging grips 30a on the hooks 30. The engaging member 37 has an engaging head 37a that is designed to engage with the engaging grips 30a when the piston 24 moves downward a little against the urging force of the reset spring 28. When the coupling units 11 and 12 come in contact with each other, therefore, the reset spring 28 pulls the engaging member 37 toward the coupling unit 11, thereby pressing the contact surface of the coupling unit 12 against that of the coupling unit 11.

When the compressed air is supplied into the pressure chamber 25 through the port 27 in the condition shown in Fig. 1, the piston 24 and hooks 30 move downward and the release pin 34 pushes open the inclined surfaces 30c, thereby opening the engaging grips 30a to bring out of engagement with a part of the coupling unit 12 on the tool and releasing the coupling unit 12 from the coupling unit 11 on the arm of the robot. When the compressed air in the pressure chamber 25 is discharged outside, the reset spring 28 causes the piston 24 and hooks 30 to move upward to the original position shown in Fig. 1.

To bring the coupling units 11 and 12 into contact, the engaging head 37a of the engaging member 37 is pressed into between the engaging grips 30a of the hooks 30 beforehand by pressing together the contact surfaces of the two units. On supplying the compressed air into the pressure chamber 25 through the port 27, the engaging grips 30a of the hooks 30 are opened. Or, the compressed air may be discharged from the pressure chamber 25 after bringing the contact surfaces of the coupling units 11 and 12 into contact with the engaging grips 30a of the hooks 30 kept open by the compressed air supplied into the pressure chamber 25. This causes the engaging grips 30a of the hooks 30 to engage with the engaging head 37a of the engaging member 37, whereupon the reset spring 28 pulls the engaging member 37 toward the coupling unit 11 on the arm of the robot and, as a consequence, the contact surface of the coupling unit 12 on the tool is pressed against the contact surface of the coupling unit 11 on the arm of the robot.

To place the joined coupling units 11 and 12 in proper position, ball rings 41 and 42, which serve as positioning couplings, are provided in the contact surfaces of the two units. The ball rings 41 and 42 are composed substantially similarly. As will be detailed in the following, each of the ball rings 41 and 42 comprises a set of annularly packed balls. The coupling units 11 and 12 are aligned and properly positioned around the axes thereof by bringing the individual balls in to engagement with each other.

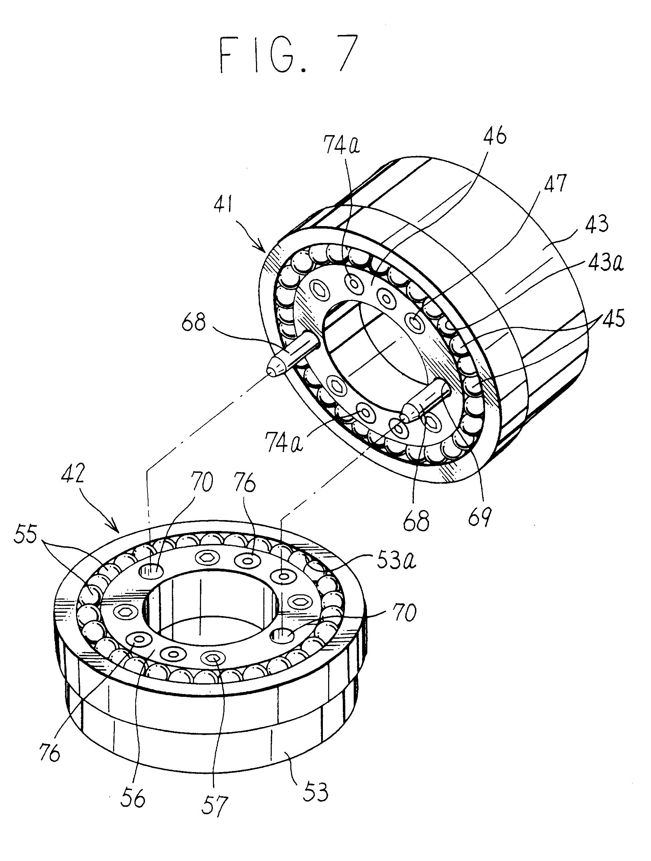

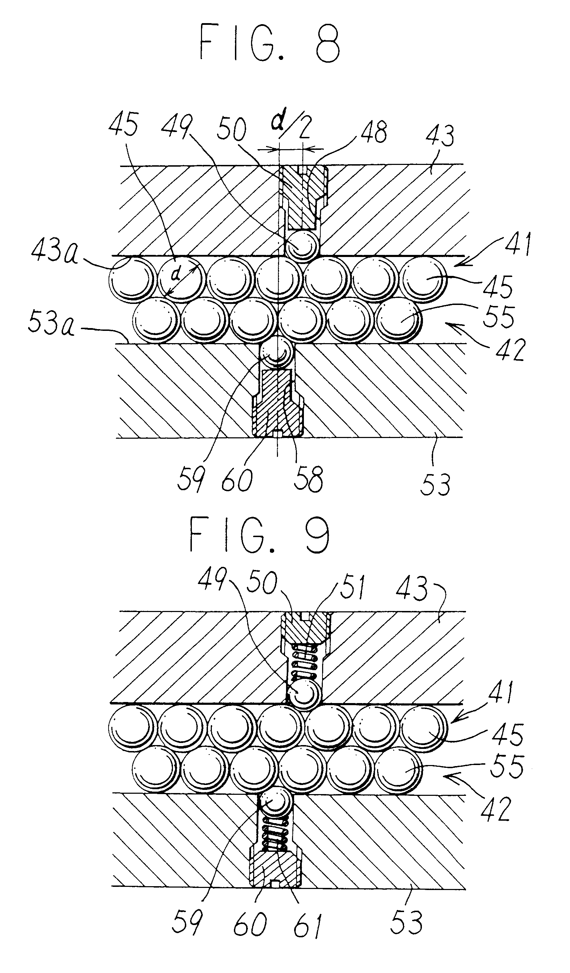

As shown in Figs. 7 to 9, the ball ring 41 has an annular ball base 43, which, in turn, has an annular groove 43a positioned on one side of the annular ball base 43 and centred about the axis thereof, to accommodate a set of closely packed balls 45 that stick out slightly. The balls 45 are fixed between the ball base 43 and an annular ball holder 46 having a tapered outer surface 46a that holds the balls 45 in position when fitted within the annularly arranged set of the balls 45 and fastened with bolts 47. As shown in Fig. 8, the ball base 43 has an engaging hole 48 extending from the back side thereof to the front side where the set of balls 45 are disposed. A part of an engaging ball 49 fitted in the engaging hole 48 sticks out in between a pair of adjoining balls set in the groove 43a, whereby the balls 45 are closely packed together and firmly fixed in position.

The engaging ball 49 may be supported either directly by a tap bolt 50 that is screwed in from behind as shown in Fig. 8 or indirectly through a keep spring 51 as shown in Fig. 9.

The ball ring 42 on the tool-side coupling unit is similarly constructed. A set of closely packed balls 55 are disposed in a groove 53a on one side of a ball base 53. The balls are fixed between the ball base 53 and a ball holder 56 having a tapered outer surface 56a and fastened with bolts 57. An engaging hole 58 in the ball base 53 accommodates an engaging ball 59 that partly sticks out in between a pair of adjoining balls 55. The engaging ball 59 is also supported either directly by a tap bolt 60 or indirectly through a keep spring 61.

Here, it is essential to displace the balls 45 on the ball ring 41 on the arm-side coupling unit 11 from the balls 55 on the ball ring 42 on the tool-side coupling unit 12 by a distance equal to one half of the diameter of the balls. This displacement causes the balls 45 on the ball ring 41 to fit between and engage with the balls 55 on the ball ring 42, thereby firmly fixing the two coupling units 11 and 12 in position around the axes thereof, as shown in Fig. 8 and 9. The overall engagement of the balls 45 and 55 thus achieved keeps the ball rings 41 and 42 and, therefore, the two coupling units 11 and 12 in exact alignment with each other.

The ball base 43 on one coupling unit 11 has a pair of guide pins 68 that stick out through holes 69 provided in the ball holder 46. The ball holder 56 and ball base 53 on the other coupling unit 12 have pin holes 70 to accommodate the guide pins 68. The guide pins 68 and pin holes 70 function to keep the relative displacement, which might arise between the approaching coupling unit 11 on the arm of the robot and the waiting coupling unit 12 on the tool to be connected thereto, within the limit to assure the proper engagement between the balls 45 and 55. To be more specific, the guide pins 68 themselves do not fix the two coupling units in position, but serve as probes. Therefore, the guide pins 68 and pin holes 70 and 71 need not be engaged with as high an accuracy as is needed for positioning. For example, a clearance of the order of 0.5 mm is tolerable.

Because of the engagement between the balls 45 and 55 on the ball rings 41 and 42, the coupling units 11 and 12 are automatically aligned and positioned around the axes thereof by simply putting them together.

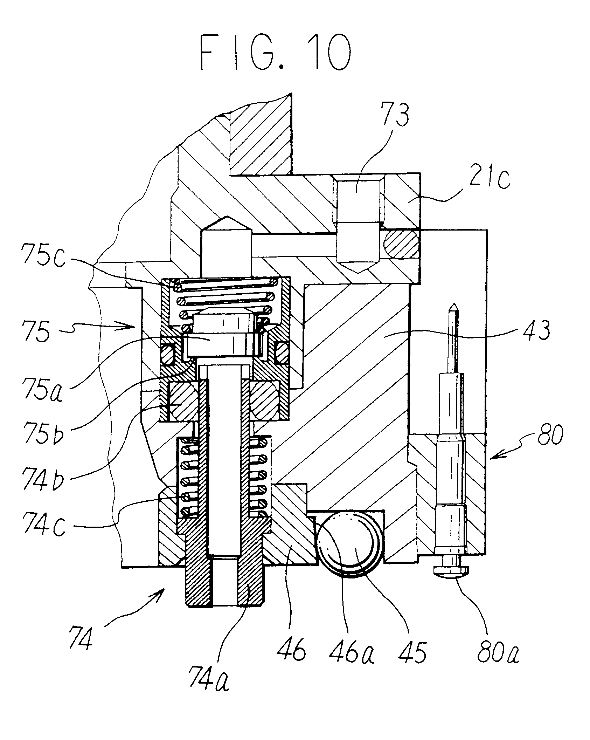

The coupling unit 11 on the arm of the robot has a port 73 to connect a compressed air supply tube and a fluid passage coupling 74 provided with a valve mechanism 75 adapted to open a passage communicating with the port 73 when connected to the coupling unit 12 on the tool, as shown in Fig. 10. The valve mechanism 75 and fluid passage coupling 74 are accommodated inside the balls 45 and through the casing, which comprises the base 21c and ball base 43, and the ball holder 46.

The fluid passage coupling 74 is sealed with a sealing member 74b and has a projecting tube 74a that is urged by a spring 74c to stick out from the plane of contact with the coupling unit 12 on the tool. The tip of the projecting tube 74a, which serves as a passage for the fluid supplied from the port 73, comes in contact with a sealing member 76 on the coupling unit 12 on the tool when the two coupling units are joined together, thereby bringing the inner passage into communication with the passage at the center of the sealing member 76. As shown in Fig. 1, the coupling unit 12 on the tool has an output port 77 to communicate with the passage at the center of the sealing member 76 in the surface that comes into contact with the tool attached thereto to permit the connection of the passage with one in the tool.

The valve mechanism 75 provided in the fluid passage coupling 74 has a valve body 75a that is positioned opposite to the inner end of the projecting tube 74a and urged by a spring 75c so as to come into, and out of, contact with a valve seat 75b provided around the inner end of the projecting tube. When the projecting tube 74a is pressed against the sealing member 76 when the coupling units 11 and 12 are joined together, the valve body 75a comes out of contact with the valve seat 75b under the influence of the pressure exerted by the inner end of the projecting tube, thereby allowing the fluid from the port 73 to flow into the space between the valve body 75a and valve seat 75b and into the projecting tube 74a through a notch at the inner end of the projecting tube 74a. As such, when the coupling units 11 and 12 are not joined together, the valve body 75a, urged by the spring 74c, closes the valve seat 75b to automatically stop the discharge of the fluid therethrough.

Provision of the guide pins 68, the pin holes 70 and the fluid passage coupling 74 having the valve mechanism 75 inside the set of balls on the ball rings 41 and 42 increases the diameter of the rings of balls arranged thereon. The larger rings of balls assure more accurate positioning and permit an effective use of the inner space and a size reduction of the two joining units as a whole.

As electrical connectors, a set of contact terminals may be provided on a detachable arched base that is bolted to a part of the periphery of the contacting edges of the two coupling units, thereby minimizing the projection of the connectors.

To the periphery of the contacting edges of the coupling units 11 and 12 are attached, with bolts 79 and 80, arched electric connectors 77 and 78 carrying a set of terminals 77a and 78a that are disposed along the curved periphery of the units 11 and 12. The terminals on the connectors 77 and 78, which slightly stick out by means of springs contained therein, are pressed into contact with each other when the two coupling units are joined together, thereby establishing an electrical connection therebetween.

The terminals 81a on the connector 81 are connected to a sensor or other device to detect the operation of the air-operated hand 13 to permit the confirmation of operation on the control system of the robot.

## Claims

1. Tool fastening apparatus for fastening an interchangeable tool to the arm of an industrial robot, the apparatus comprising:
a detachable arm-side coupling unit attached to the arm of the robot and a detachable tool-side coupling unit attached to the tool; and
ball rings constituting positioning couplings which are each composed of a set of annularly disposed balls sticking out slightly from the plane of contact between said respective two coupling units;
the two coupling units being properly positionable relative to each other by bringing the balls on one ball ring into engagement with the balls on the other ball ring by fitting each ball on one ball ring in between two adjacent balls on the other ball ring;
wherein the ball rings are provided in the periphery of the arm-side and tool-side coupling units and fluid passage couplings are provided inside the two ball rings for supplying compressed air or hydraulic fluid to operate the tool when the two coupling units are joined together.

2. Tool fastening apparatus according to claim 1, in which:
the fluid passage coupling on the arm-side coupling unit has a valve mechanism to open the passage for the compressed air or hydraulic fluid when the arm-side coupling unit is connected to the tool-side coupling unit.

3. Tool fastening apparatus according to Claim 1 or Claim 2, in which:
an annular groove is provided in one surface of the annular ball base on each of the arm-side and tool-side coupling units and centred about the axis of the respective ball base, each annular groove carrying a set of annularly packed balls slightly sticking out from the respective ball base and being fixed in position by means of an annular ball holder fitted inside the set of balls and having a tapered outer surface, the tapered outer surfaces of the ball holders holding the balls between themselves and the ball bases, and the fluid passage couplings being provided in such a manner as to pass through the two ball holders.

4. Tool fastening apparatus according to claim 3, in which:
engaging holes opening to the set of balls are provided in the ball bases on the arm-side and tool-side coupling units, each engaging hole accommodating an engaging ball part of which sticks out in between a pair of adjacent balls to fix the position of the set of balls; and wherein
the balls on the ball rings of the arm-side and tool-side coupling units are displaced from one another by a distance equal to one half of the diameter of a ball.

5. Tool fastening apparatus according to any preceding claim, in which:
guide pins to keep the relative displacement between the two coupling units within the limit to assure the proper engagement of the balls are provided inside the set of balls on the ball ring of one coupling unit, while pin holes to accommodate the guide pins are provided inside the set of balls on the ball ring of the other coupling unit.

6. Tool fastening apparatus according to any preceding claim, in which:
a pair of hooks to engage with and disengage from the tool-side coupling unit are pivotally attached in the middle portion thereof to the support segment of a piston reciprocating in a cylinder provided in the arm-side coupling unit, with an engaging grip to engage with a part of the tool-side coupling unit provided at the tip of each hook; and
a release-pin positioned between the pair of hooks is provided on the arm-side coupling unit to release the engaging grips on the hooks when the piston moves.

7. Tool fastening apparatus according to claim 6, in which:
the engaging grips at the tip of the hooks are adapted to engage with an engaging member on the tool-side coupling unit when the piston exerts a pressing force on the two coupling units.

8. Tool fastening apparatus according to any preceding claim, in which:
arched electrical connectors comprising a set of contact terminals are detachably attached to a part of the periphery of the contacting edges of the arm-side and tool-side coupling units by means of bolts.

## Patentansprüche

1. Befestigungsvorrichtung für Werkzeuge zur Befestigung eines austauschbaren Werkzeugs am Arm eines Industrieroboters, wobei die Vorrichtung folgendes umfaßt :
eine abnehmbare Kuppeleinrichtung der Armseite, welche am Arm des Roboters befestigt ist, sowie eine abnehmbare Kuppeleinrichtung der Werkzeugseite, welche am Werkzeug befestigt ist ; und
Kugelringe, bei denen es sich um Positionierungskopplungen handelt, wobei jeder der Kugelringe aus einem Satz ringförmig angeordneter Kugeln besteht, welche geringfügig aus der Berührungsfläche der beiden jeweiligen Kuppeleinrichtungen herausragen ;
wobei die beiden Kuppeleinrichtungen sich in Bezug aufeinander angemessen positionieren lassen, indem die Kugeln des einen Kugelrings in die Kugeln des anderen Kugelrings eingreifen, wobei jede Kugel des einen Kugelrings zwischen zwei aneinandergrenzende Kugeln des anderen Kugelrings einrückt ;
worin sich die Kugelringe an der Außenfläche der Kuppeleinrichtungen der Armseite und der Werkzeugseite befinden und Kopplungen für den Durchfluß von Fluiden in den beiden Kugelringen vorhanden sind, um die zur Betätigung des Werkzeugs erforderliche Druckluft oder Hydraulikflüssigkeit zuzuführen, wenn die beiden Kuppeleinrichtungen zusammengefügt sind.

2. Befestigungsvorrichtung für Werkzeuge nach Anspruch 1, worin :
die Kopplung für den Durchfluß von Fluiden an der Kuppeleinrichtung der Armseite einen Ventilmechanismus besitzt, um den Durchlaß für die Druckluft oder die Hydraulikflüssigkeit zu öffnen, wenn die Kuppeleinrichtung der Armseite mit der Kuppeleinrichtung der Werkzeugseite verbunden ist.

3. Befestigungsvorrichtung für Werkzeuge nach Anspruch 1 oder Anspruch 2, worin :
in einer Fläche der ringförmigen Kugelunterlage an jeder der Kuppeleinrichtungen der Armseite und der Werkzeugseite ein Ringkanal vorhanden ist, welcher um die Mittelachse der jeweiligen Kugelunterlage zentriert angeordnet ist, wobei jeder Ringkanal einen Satz ringförmig gepackter Kugeln trägt, welche geringfügig aus der jeweiligen Kugelunterlage herausragen und mit Hilfe einer ringförmigen Kugelhaltevorrichtung in ihrer Stellung fixiert sind, wobei die ringförmige Kugelhaltevorrichtung im Kugelsatz eingebaut ist und eine kegelige Außenfläche aufweist, wobei die kegelige Außenfläche der Kugelhaltevorrichtung die Kugeln zwischen sich und den Kugelunterlagen hält, und wobei die Kopplungen für den Durchfluß von Fluiden so angebracht sind, daß sie durch die beiden Kugelhaltevorrichtungen verlaufen.

4. Befestigungsvorrichtung für Werkzeuge nach Anspruch 3, worin :
in den Kugelunterlagen der Kupplungsvorrichtungen der Armseite und der Werkzeugseite Kupplungsöffnungen vorgesehenen sind, die sich in Richtung der Kugelsätze öffnen, wobei in jeder Kupplungsöffnung eine Kugel zum Einrasten untergebracht ist, wobei ein Teil der Kugel zwischen zwei aneinandergrenzende Kugeln hineinragt, so daß die Position des Kugelsatzes fixiert ist ; und worin
die Kugeln auf den Kugelringen der Kupplungsvorrichtung der Armseite und der Werkzeugseite um einem Abstand zueinander versetzt angeordnet sind, welcher der Hälfte des Durchmessers einer Kugel entspricht.

5. Befestigungsvorrichtung für Werkzeuge nach einem der vorangegangenen Ansprüche, worin :
im Kugelsatz auf dem Kugelring einer Kuppeleinrichtung Führungsstifte vorgesehen sind, welche die relative Verschiebung zwischen den beiden Kuppeleinrichtungen einschränken, so daß ein präzises Einrasten der Kugeln gewährleistet ist, während im Kugelsatz auf dem Kugelring der anderen Kuppeleinrichtung Stiftlöcher zur Aufnahme der Führungsstifte vorgesehen sind.

6. Befestigungsvorrichtung für Werkzeuge nach einem der vorangegangenen Ansprüche, worin:
ein Hakenpaar, welches sich in die Kuppeleinrichtung der Werkzeugseite einrasten und aus dieser ausrasten läßt, zapfenartig im mittleren Teil der Kuppeleinrichtung angebracht ist, und zwar am Tragestück eines Kolbens, der sich in einem Zylinder hin- und her bewegt, welcher in der Kupplungsvorrichtung der Armseite vorhanden ist, wobei das Hakenpaar mit einem Griff zum Einrasten versehen ist, um in einen Teil der Kuppeleinrichtung der Werkzeugseite einzugreifen, welcher an der Spitze eines jeden Hakens vorhanden ist ; und
ein Ausklinkstift, welcher zwischen den beiden Haken angebracht ist, an der Kupplungsvorrichtung der Armseite vorgesehen ist, um die Einrastgriffe der Haken zu lösen, wenn der Kolben sich bewegt.

7. Befestigungsvorrichtung für Werkzeuge nach Anspruch 6, worin die Einrastgriffe an der Spitze der Haken geeignet sind, in ein Einrückelement an der Kuppelvorrichtung der Werkzeugseite einzugreifen, wenn der Kolben auf die beiden Kuppelvorrichtungen Druck ausübt.

8. Befestigungsvorrichtung für Werkzeuge nach einem der vorangegangenen Ansprüche, worin :
bogenförmige elektrische Anschlußstücke, welche einen Satz Kontaktanschlüsse umfassen, abnehmbar an einem Teil der Außenfläche der Berührungskanten der Kuppeleinrichtung der Armseite und der Werkzeugseite befestigt sind.

## Revendications

1. Dispositif de fixation d'un outil interchangeable sur le bras d'un robot industriel, comprenant :
une unité d'accouplement démontable côté bras, fixée sur le bras du robot et une unité d'accouplement démontable côté outil, fixée sur l'outil ; et
des anneaux à billes constituant des accouplements de positionnement, qui sont chacun composés d'un jeu de billes disposées suivant un anneau, dépassant légèrement du plan de contact entre lesdites deux unités d'accouplement respectives ;
les deux unités d'accouplement pouvant être positionnées de façon appropriée l'une par rapport à l'autre, en amenant les billes de l'un des anneaux de billes en prise avec les billes de l'autre anneau de billes, en introduisant chaque bille de l'un des anneaux de billes entre deux billes adjacentes de l'autre anneau de billes ; caractérisé en ce que les anneaux de billes sont disposés sur la périphérie des unités d'accouplement côté bras et côté outil, et des raccords de passage de fluide sont prévus à l'intérieur des deux anneaux de billes, pour amener de l'air comprimé ou du fluide hydraulique destiné à faire fonctionner l'outil, quand les deux unités d'accouplement sont réunies.

2. Dispositif de fixation d'outil selon la revendication 1, dans lequel :
le raccord de passage de fluide sur l'unité d'accouplement côté bras est pourvu d'un mécanisme à clapet, pour ouvrir le passage destiné à l'air comprimé ou au fluide hydraulique, quand l'unité d'accouplement côté bras est reliée à l'unité d'accouplement côté outil.

3. Dispositif de fixation d'outil selon la revendication 1 ou la revendication 2, dans lequel :
une rainure annulaire est prévue sur une surface de la base de billes annulaire, sur chacune des unités d'accouplement côté bras et côté outil et centrée par rapport à l'axe longitudinal de la base de billes respective, chaque rainure annulaire portant un jeu de billes groupées suivant un anneau, dépassant légèrement de la base de billes respective, et étant fixée en position au moyen d'une cage de billes annulaire, disposée à l'intérieur du jeu de billes et ayant une face extérieure inclinée, la face extérieure inclinée des cages de billes tenant les billes entre elles et entre les bases de billes, les raccords de passage de fluide étant disposés de manière à traverser les deux cages de billes.

4. Dispositif de fixation d'outil selon la revendication 3, dans lequel :
des trous de blocage, s'ouvrant vers le jeu de billes sont disposés dans les bases de billes sur les unités d'accouplement côté bras et côté outil, chaque trou de blocage recevant une bille de blocage, dont une partie dépasse entre une paire de billes adjacentes pour bloquer la position du jeu de billes ;
et dans lequel les billes, sur les anneaux de billes des unités d'accouplement côté bras et côté outil, sont décalées les unes par rapport aux autres, d'une distance égale à la moitié du diamètre d'une bille.

5. Dispositif de fixation d'outil selon l'une quelconque des revendications précédentes, dans lequel :
des broches de guidage prévues pour maintenir le décalage relatif entre les deux unités d'accouplement dans la limite assurant le blocage approprié des billes, sont disposées entre le jeu de billes sur l'anneau de billes d'une unité d'accouplement, tandis que des trous de broche pour recevoir les broches de guidage sont disposés entre le jeu de billes sur l'anneau de billes de l'autre unité d'accouplement.

6. Dispositif de fixation d'outil selon l'une quelconque des revendications précédentes, dans lequel :
une paire de crochets, destinés à saisir et à libérer l'unité d'accouplement côté outil, est fixée de façon à pouvoir pivoter dans son tronçon médian sur le segment support d'un piston, animé d'un mouvement de va-et-vient dans un cylindre, prévu dans l'unité d'accouplement côté bras, une griffe de saisie destinée à saisir une partie de l'unité d'accouplement côté outil étant disposée sur l'extrémité de chaque crochet ; et
une broche de déblocage, prévue entre la paire de crochets, est disposée sur l'unité d'accouplement côté bras, pour débloquer les griffes de saisie sur les crochets, quand le piston se déplace.

7. Dispositif de fixation d'outil selon la revendication 6, dans lequel :
les griffes de saisie sur les extrémités des crochets sont conçues pour saisir un élément de saisie sur l'unité d'accouplement côté outil, quand le piston exerce une force de pression sur les deux unités d'accouplement.

8. Dispositif de fixation d'outil selon l'une quelconque des revendications précédentes, dans lequel :
des connecteurs électriques incurvés comprenant un jeu de bornes de contact sont fixés au moyen d'écrous de façon amovible sur une partie de la périphérie des bords formant contact des unités d'accouplement côté bras et côté outil.
